# FASCICULE DE BREVET EUROPEEN

(11) **EP 4 309 970 B1**
(45) Date de publication et mention de la délivrance du brevet: **24.12.2025**
(21) Numéro de dépôt: 23186419.0
(22) Date de dépôt: 19.07.2023
(51) Int. Cl.: B61C 3/02, B61C 17/06, B60K 1/04

(54) **ENSEMBLE DE STOCKAGE D'ÉNERGIE ÉLECTRIQUE ET VÉHICULE ASSOCIÉ**
STROMSPEICHERANORDNUNG UND FAHRZEUG DAMIT
ELECTRIC ENERGY STORAGE ASSEMBLY AND VEHICLE

(30) Priorité: 20.07.2022 FR 2207436
(43) Date de publication de la demande: 24.01.2024
(73) Titulaire: SpeedInnov, 75008 Paris (FR)
(72) Inventeur: BOLLENGIER, Christophe, 68780 Sentheim (FR); TRAN, Thanh -Ha, 33300 Bordeaux (FR); COUTY, Matthieu, 17440 Aytre (FR); BENAIR, Emilie, 33640 Ayguemorte les Graves (FR); BRES, Romain, 33290 Blanquefort (FR); BERTIN, Matthieu, 33140 Villenave d'Ornon (FR); DUGOIS, Kévin, 33000 Bordeaux (FR); PORCHERON, Julien, 33520 Bruges (FR); ELGOYHEN, Jocelyn, 32200 Bordeaux (FR)
(74) Mandataire: Plasseraud IP

(56) Documents cités:
- WO-A1-2019/153720
- FR-A1- 2 970 455
- FR-A1- 3 078 836
- US-A1- 2014 261 059
- US-A1- 2020 282 837

## Description

La présente invention concerne un ensemble de stockage d'énergie électrique.

L'invention concerne également un véhicule comprenant l'ensemble précédent.

Les véhicules à propulsion électrique électriques, notamment les véhicules ferroviaires, tirent généralement d'une source extérieure l'énergie nécessaire à leur propulsion et au fonctionnement de circuits auxiliaires, comme l'électronique de contrôle, l'éclairage, ou la ventilation.

L'énergie est par exemple fournie par un réseau électrique de haute tension, à travers une caténaire s'étendant au-dessus des voies de circulation, ou bien à travers un ou plusieurs rails électrifiés situés entre les rails de roulement, selon les applications.

La source d'énergie extérieure n'est pas toujours disponible. Par exemple parce que le réseau d'alimentation est endommagé ou en panne, ou encore parce que le véhicule se trouve dans un lieu où le réseau n'est pas accessible.

Il est connu d'équiper ces véhicules d'un système d'alimentation électrique auxiliaire comprenant un ensemble de stockage d'énergie électrique pouvant se substituer temporairement à la source d'énergie externe. Cet ensemble de stockage permet ainsi l'alimentation des fonctions auxiliaires, jusqu'au raccordement du véhicule à la source d'énergie extérieure.

De tels véhicules sont décrits dans les documents US 2014/261059 A1 et FR 2 970 455 A1.

Certains véhicules sont munis d'un moteur secondaire, par exemple un moteur thermique, pouvant se substituer temporairement à la source primaire pour assurer la propulsion.

D'autres véhicules ne comprennent pas de tel moteur secondaire, et il est alors nécessaire que l'ensemble de stockage d'énergie électrique puisse assurer l'alimentation temporaire du circuit de propulsion. Cela nécessite une capacité de stockage et donc des dimensions bien supérieures de l'ensemble de stockage d'énergie.

Ces ensembles de stockage d'énergie électrique peuvent encore être améliorés. En effet, selon les équipements de propulsion installés sur le véhicule, les capacités de stockage nécessaires de l'ensemble varient beaucoup, et chaque application peut alors nécessiter une nouvelle conception de l'ensemble.

Un but de l'invention est donc de fournir un ensemble pouvant être adapté simplement à différent types de véhicules présentant des besoins différents en termes d'énergie électrique stockée, sans nécessiter une nouvelle conception de l'ensemble.

Ainsi, l'invention a pour objet un ensemble de stockage d'énergie électrique selon la revendication 1.

Un tel ensemble peut être installé tel quel sur des véhicules ne nécessitant pas de source d'énergie de substitution pour la propulsion, et peut être muni d'un ensemble moyenne tension pour les véhicules le requérant.

Selon des modes de réalisation particuliers, l'ensemble selon l'invention comprend l'une ou plusieurs des caractéristiques suivantes, prise(s) isolément ou selon toute combinaison techniquement réalisable :
- le module basse tension comprend au moins une batterie lithium-ion et/ou au moins un condensateur à haute capacité ;
- le système de ventilation comprend :
   - au moins une prise d'air munie d'au moins une turbine, la prise d'air comprenant une première sortie et une deuxième sortie, et
   - un premier conduit de ventilation du module basse tension relié à la première sortie, la deuxième sortie étant adaptée pour être reliée à un deuxième conduit de ventilation du module moyenne tension ou pour être obturée en l'absence de module moyenne tension reçu sur l'emplacement ; et
- l'emplacement comprend des organes positionnement du module moyenne tension agencés pour permettre la mise en place du module moyenne tension sur le support.

L'invention concerne également un véhicule comprenant au moins un ensemble comme décrit plus haut, un circuit de propulsion et des circuits auxiliaires, le véhicule étant apte à puiser de l'énergie d'une source principale d'énergie électrique extérieure au véhicule pour alimenter le circuit de propulsion et les circuits auxiliaires en fonctionnement normal du véhicule.

Selon des modes de réalisation particuliers, le véhicule selon l'invention comprend l'une ou plusieurs des caractéristiques suivantes, prise(s) isolément ou selon toute combinaison techniquement réalisable :
- le module basse tension est configuré pour alimenter les circuits auxiliaires du véhicule lorsque la source principale d'énergie électrique n'est pas disponible ;
- chaque ensemble comprend un module moyenne tension de stockage d'énergie reçu sur l'emplacement et refroidi par le système de ventilation ;
- le module moyenne tension est configuré pour alimenter le circuit de propulsion du véhicule lorsque la source principale d'énergie électrique n'est pas disponible ; et
- chaque emplacement est libre.

L'invention sera mieux comprise à la lecture de la description qui suit, donnée uniquement à titre d'exemple et faite en référence aux dessins annexés, parmi lesquels :
- [Fig 1] la figure 1 est une vue en perspective écorchée d'un véhicule selon l'invention, et
- [Fig 2] la figure 2 est une vue en perspective éclatée d'un ensemble de stockage d'énergie électrique du véhicule de la figure 1.

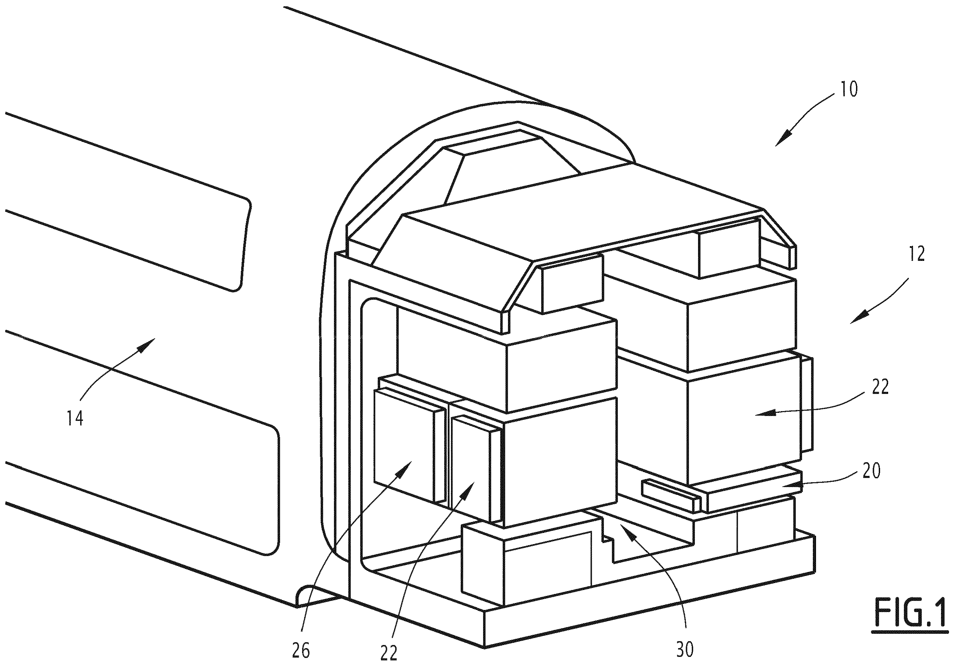

En référence à la figure 1, on décrit un véhicule 10, par exemple destiné au transport de passagers.

Le véhicule 10 est par exemple un véhicule ferroviaire, et notamment un véhicule ferroviaire à grande vitesse.

Par « grande vitesse », on entend que le véhicule 10 est apte à circuler à des vitesses supérieures ou égales à 220 km/h.

Le véhicule 10 est un véhicule à propulsion électrique, c'est-à-dire dont la propulsion est assurée par des moteurs électriques et dont la source principale d'énergie est une source d'énergie électrique.

Le véhicule 10 comprend un circuit de propulsion et des circuits auxiliaires, et il est apte à puiser de l'énergie d'une source principale d'énergie électrique extérieure au véhicule 10, pour alimenter le circuit de propulsion et les circuits auxiliaires en fonctionnement normal du véhicule.

Le circuit de propulsion comprend par exemple un convertisseur de puissance et une pluralité de moteurs électriques.

Les circuits auxiliaires comprennent par exemple un système d'éclairage, un système de ventilation et de climatisation, un système de signalisation, des systèmes de communication interne et externe, etc...

La source principale est par exemple une source extérieure au véhicule 10, notamment une caténaire s'étendant au-dessus d'une voie de circulation du véhicule 10.

L'énergie fournie par la source principale au véhicule 10 est délivrée sous haute tension.

Par « haute tension », on entend une tension supérieure à 2000 V, et notamment supérieure à 10000 V.

L'énergie électrique délivrée par la source principale est transmise au circuit de propulsion pour alimenter chaque moteur électrique du véhicule 10, par exemple situés dans une ou plusieurs motrices du véhicule 10, ainsi qu'aux circuits auxiliaires.

Le véhicule 10 comprend au moins un ensemble 12 de stockage d'énergie électrique, destiné à stocker une part de l'énergie électrique fournie par la source extérieure afin de jouer le rôle d'une source d'énergie auxiliaire.

Notamment, l'énergie électrique stockée par l'ensemble 12 est utilisée pour alimenter le véhicule 10 en fonctionnement dégradé, c'est-à-dire lorsque la source extérieure n'est pas disponible.

Par exemple, le véhicule 10 comprend deux ensembles 12 de stockage d'énergie électrique, installés dans des voitures 14 voisines des motrices situées aux deux extrémités du véhicule 110, dans des zones appelées greffons.

Chaque ensemble 12 comprend un support 20, au moins un module basse tension 22 de stockage d'énergie, au moins un emplacement 24 de réception d'un module moyenne tension 26 de stockage d'énergie et un système de ventilation 28.

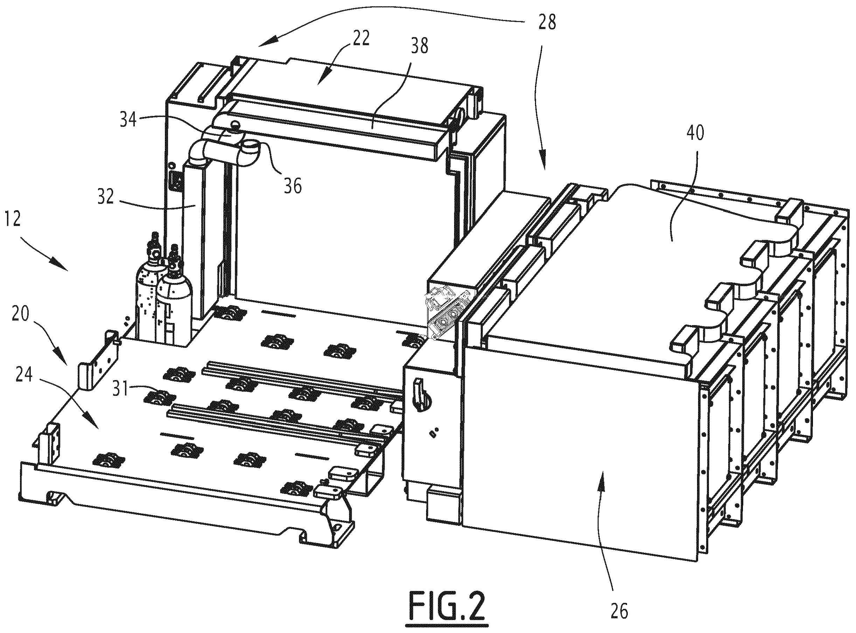

Dans l'exemple représenté sur les figures 1 et 2, l'ensemble 12 comprend un support 20 en deux parties s'étendant symétriquement de part et d'autre d'une allée 30 centrale de circulation, ainsi que deux modules basse tension 22 et deux emplacements de réception 24 répartis symétriquement de part et d'autre de l'allée 30, sur les deux parties du support 20.

Chaque module basse tension 22 est disposé sur le support 20, notamment sur une partie du support 20.

Le module basse tension 22 est destiné à stocker l'énergie électrique et à la restituer ultérieurement sous une basse tension électrique.

Par « basse tension », on entend une tension comprise entre 50 V et 250 V, par exemple 110 V.

Par exemple, le module basse tension 22 comprend au moins une batterie lithium-ion et/ou au moins un condensateur à haute capacité.

Le module basse tension 22 est configuré pour alimenter les circuits auxiliaires du véhicule 10 en mode dégradé, afin notamment d'assurer les fonctions nécessaires à la sécurité des voyageurs et du personnel de bord.

Chaque emplacement 24 est agencé pour recevoir un module moyenne tension 26 de stockage d'énergie.

L'emplacement 24 comprend des organes de positionnement 31 du module moyenne tension 26 agencés pour permettre la mise en place du module moyenne tension 26 sur le support 20.

Les organes de positionnement 31 comprennent par exemple des rouleaux de dépose et des orifices de fixation de butées, destinés à faciliter le positionnement 31 du module moyenne tension 26.

Selon la configuration désirée pour le véhicule 10, le module moyenne tension 26 est mis en place ou non dans le véhicule 10.

Le cas échéant, chaque module moyenne tension 26 est disposé sur le support 20, et est reçu par un des emplacements de réception 24.

Le module moyenne tension 26 est destiné à stocker l'énergie électrique et à la restituer ultérieurement sous une moyenne tension électrique.

Par « moyenne tension », en entend une tension comprise entre 300 V et 1500 V, par exemple 700 V.

Le module moyenne tension 26 est configuré pour alimenter le circuit de propulsion en mode dégradé, constituant ainsi un système de propulsion auxiliaire afin de permettre au véhicule 10 de se déplacer de manière autonome sur de courtes distances.

Cela est notamment pertinent lorsque la source principale est une caténaire endommagée localement, la propulsion auxiliaire permettant de rejoindre une section fonctionnelle de la caténaire.

Cependant, pour certaines applications du véhicule 10, une telle propulsion auxiliaire n'est pas nécessaire, et les modules moyenne tension 26 ne sont pas installés, de manière à réduire le coût et la masse du véhicule 10.

Le système de ventilation 28 est configuré pour refroidir chaque module basse tension 22 seul, et pour refroidir chaque module basse tension 22 et chaque module moyenne tension 26 lorsque ces derniers sont installés sur le véhicule 10.

Le système de ventilation 28 comprend au moins une prise d'air 32, la prise d'air 32 comprenant une première sortie 34 et une deuxième sortie 36, ainsi qu'un premier conduit 38 de ventilation du module basse tension 22 relié à la première sortie 34.

La deuxième sortie 36 est adaptée pour être reliée à un deuxième conduit 40 de ventilation du module moyenne tension 26 lorsque ce module moyenne tension 26 est mis en place sur le véhicule 10, ou pour être obturée lorsque le module moyenne tension 26 est absent.

La prise d'air 32 est munie d'au moins une turbine configurée pour faire circuler l'air à travers le premier conduit et optionnellement le deuxième conduit.

La turbine est configurée pour faire circuler l'air avec un débit contrôlé. Notamment, la turbine est configurée pour imposer un débit faible lorsque le module moyenne tension 26 est absent, et pour imposer un débit important lorsque le module moyenne tension 26 est installé sur le véhicule 10.

Le débit faible est par exemple inférieur à 500 m³/h, notamment voisin de 400 m³/h.

Le débit important est par exemple supérieur à 700 m³/h, notamment voisin de 900 m³/h.

Le système de ventilation 28 est ainsi facilement adaptable à la présence ou non du module moyenne tension 26 sur le véhicule 10, par une simple obturation de la deuxième sortie de la prise d'air et un simple réglage de la turbine de ventilation.

L'ensemble 12 de stockage d'énergie décrit plus haut est donc facilement adaptable à des configurations différentes du véhicule 10, selon qu'une propulsion auxiliaire est nécessaire ou non, sans nécessiter une nouvelle conception de l'ensemble 12 ou la fabrication de pièces différentes.

## Revendications

1. Ensemble (12) de stockage d'énergie électrique comprenant :
- un support (20), et
- un module basse tension (22) de stockage d'énergie disposé sur le support (20) et destiné à restituer l'énergie sous une tension électrique comprise entre 50 V et 250 V,
et
- un emplacement (24) de réception sur le support (20) d'un module moyenne tension (26) de stockage d'énergie destiné à restituer l'énergie sous une tension électrique comprise entre 300 V et 1500 V,
**caractérisé en ce que** l'ensemble (12) comprend également:
- un système de ventilation (28) agencé pour, en l'absence de module moyenne tension reçu sur l'emplacement, refroidir le module basse tension (22) seul, et en présence d'un module moyenne tension reçu sur l'emplacement (24), refroidir le module basse tension (22) et le module moyenne tension (26).

2. Ensemble (12) selon la revendication 1, dans lequel le module basse tension (22) comprend au moins une batterie lithium-ion et/ou au moins un condensateur à haute capacité.

3. Ensemble (12) selon la revendication 1 ou 2, dans lequel le système de ventilation (28) comprend :
- au moins une prise d'air (32) munie d'au moins une turbine, la prise d'air (32) comprenant une première sortie (34) et une deuxième sortie (36), et
- un premier conduit (38) de ventilation du module basse tension (22) relié à la première sortie (34),
la deuxième sortie (36) étant adaptée pour être reliée à un deuxième conduit (40) de ventilation du module moyenne tension (26) ou pour être obturée en l'absence de module moyenne tension reçu sur l'emplacement.

4. Ensemble (12) selon l'une quelconque des revendications 1 à 3, dans lequel l'emplacement (24) comprend des organes positionnement (31) du module moyenne tension (26) agencés pour permettre la mise en place du module moyenne tension (26) sur le support (20).

5. Véhicule (10) comprenant au moins un ensemble (12) selon l'une quelconque des revendications 1 à 4, un circuit de propulsion et des circuits auxiliaires, le véhicule (10) étant apte à puiser de l'énergie d'une source principale d'énergie électrique extérieure au véhicule (10) pour alimenter le circuit de propulsion et les circuits auxiliaires en fonctionnement normal du véhicule (10).

6. Véhicule (10) selon la revendication 5, dans lequel le module basse tension (22) est configuré pour alimenter les circuits auxiliaires du véhicule (10) lorsque la source principale d'énergie électrique n'est pas disponible.

7. Véhicule (10) selon la revendication 5 ou 6, dans lequel chaque ensemble (12) comprend un module moyenne tension (26) de stockage d'énergie reçu sur l'emplacement (24) et refroidi par le système de ventilation (28).

8. Véhicule (10) selon la revendication 7, dans lequel le module moyenne tension (26) est configuré pour alimenter le circuit de propulsion du véhicule (10) lorsque la source principale d'énergie électrique n'est pas disponible.

9. Véhicule (10) selon la revendication 5 ou 6, dans lequel chaque emplacement (24) est libre.

## Patentansprüche

1. Elektrische Energiespeicheranordnung (12), umfassend:
- einen Träger (20), und
- ein auf dem Träger (20) angeordnetes Niederspannungs-Energiespeichermodul (22) zur Rückgabe von Energie bei einer elektrischen Spannung zwischen 50 V und 250 V und
- einen Aufnahmebereich (24) auf dem Träger (20) für ein Mittelspannungs-Energiespeichermodul (26) zur Rückgabe der Energie bei einer elektrischen Spannung zwischen 300 V und 1500 V,
**dadurch gekennzeichnet, dass** die Anordnung (12) ferner umfasst:
- ein Belüftungssystem (28), das dazu ausgebildet ist, bei Nichtvorhandensein eines Mittelspannungsmoduls an dem Bereich das Niederspannungsmodul (22) allein zu kühlen und bei Vorhandensein eines Mittelspannungsmoduls an dem Bereich (24) das Niederspannungsmodul (22) und das Mittelspannungsmodul (26) zu kühlen.

2. Anordnung (12) nach Anspruch 1, wobei das Niederspannungsmodul (22) wenigstens eine Lithium-Ionen-Batterie und/oder wenigstens einen Kondensator mit hoher Kapazität umfasst.

3. Anordnung (12) nach Anspruch 1 oder 2, wobei das Belüftungssystem (28) umfasst:
- wenigstens einen mit wenigstens einem Gebläse versehenen Lufteinlass (32), umfassend einen ersten Auslass (34) und einen zweiten Auslass (36), und
- einen ersten Lüftungskanal (38) des Niederspannungsmoduls (22), der mit dem ersten Auslass (34) verbunden ist,
wobei der zweite Auslass (36) dazu ausgebildet ist, mit einem zweiten Lüftungskanal (40) des Mittelspannungsmoduls (26) verbunden oder verschlossen zu werden, wenn kein Mittelspannungsmodul in diesem Bereich vorhanden ist.

4. Anordnung (12) nach einem der Ansprüche 1 bis 3, wobei der Bereich (24) Positionierungselemente (31) für das Mittelspannungsmodul (26) umfasst, die dazu angeordnet sind, die Platzierung des Mittelspannungsmoduls (26) auf dem Träger (20) zu ermöglichen.

5. Fahrzeug (10) mit wenigstens einer Anordnung (12) nach einem der Ansprüche 1 bis 4, einem Antriebskreis und Hilfskreisen, wobei das Fahrzeug (10) in der Lage ist, Energie aus einer Hauptstromquelle außerhalb des Fahrzeugs (10) zu beziehen, um den Antriebskreis und die Hilfskreise im Normalbetrieb des Fahrzeugs (10) zu versorgen.

6. Fahrzeug (10) nach Anspruch 5, wobei das Niederspannungsmodul (22) dazu ausgebildet ist, die Hilfskreise des Fahrzeugs (10) zu versorgen, wenn die Hauptstromquelle nicht verfügbar ist.

7. Fahrzeug (10) nach Anspruch 5 oder 6, wobei jede Anordnung (12) ein Mittelspannungsmodul (26) zur Energiespeicherung umfasst, das in dem Bereich (24) aufgenommen und durch das Belüftungssystem (28) gekühlt wird.

8. Fahrzeug (10) nach Anspruch 7, wobei das Mittelspannungsmodul (26) dazu ausgebildet ist, den Antriebskreis des Fahrzeugs (10) mit Strom zu versorgen, wenn die Hauptstromquelle nicht verfügbar ist.

9. Fahrzeug (10) nach Anspruch 5 oder 6, wobei jeder Aufnahmebereich (24) frei ist.

## Claims

1. An electric energy storage assembly (12) comprising:
- a support (20), and
- a low-voltage energy storage module (22) disposed on the support (20) and intended to deliver energy under an electrical voltage between 50 V and 250 V,
and
- a location (24) for receiving on the support (20) a medium-voltage energy storage module (26) intended to deliver energy under an electrical voltage between 300 V and 1,500 V,
**characterised in that** the assembly (12) also comprises:
- a ventilation system (28) arranged to, in the absence of medium-voltage module received at the location, cool the low-voltage module (22) alone, and in the presence of a medium-voltage module received on the location (24), cool the low-voltage module (22) and the medium-voltage module (26).

2. Assembly (12) according to claim 1, wherein the low-voltage module (22) comprises at least one lithium-ion battery and/or at least one high-capacity capacitor.

3. Assembly (12) according to claim 1 or 2, wherein the ventilation system (28) comprises:
- at least one air intake (32) provided with at least one turbine, the air intake (32) comprising a first outlet (34) and a second outlet (36), and
- a first duct (38) for ventilating the low-voltage module (22) connected to the first outlet (34),
the second outlet (36) being adapted to be connected to a second duct (40) for ventilating the medium-voltage module (26) or to be sealed off in the absence of a medium-voltage module received at the location.

4. Assembly (12) according to any one of claims 1 to 3, wherein the location (24) comprises members (31) for positioning the medium-voltage module (26) arranged to make it possible to install the medium-voltage module (26) on the support (20).

5. Vehicle (10) comprising at least one assembly (12) according to any one of claims 1 to 4, a propulsion circuit and auxiliary circuits, the vehicle (10) being capable of drawing energy from a main electric energy source external to the vehicle (10) to power the propulsion circuit and the auxiliary circuits during normal operation of the vehicle (10).

6. Vehicle (10) according to claim 5, wherein the low-voltage module (22) is configured to power the auxiliary circuits of the vehicle (10) when the main electric energy source is not available.

7. Vehicle (10) according to claim 5 or 6, wherein each assembly (12) comprises a medium-voltage energy storage module (26) received at the location (24) and cooled by the ventilation system (28).

8. Vehicle (10) according to claim 7, wherein the medium-voltage module (26) is configured to power the propulsion circuit of the vehicle (10) when the main electric energy source is not available.

9. Vehicle (10) according to claim 5 or 6, wherein each location (24) is free.
